(19) **Europäisches Patentamt**
**European Patent Office**
**Office européen des brevets**

(11) **EP 4 629 188 A1**

(12) **EUROPEAN PATENT APPLICATION**

(43) Date of publication:
**08.10.2025 Bulletin 2025/41**

(21) Application number: **25167613.6**

(22) Date of filing: **01.04.2025**

(51) International Patent Classification (IPC):
**G06V 10/764** (2022.01)   **G06V 10/82** (2022.01)
**G06V 20/56** (2022.01)

(52) Cooperative Patent Classification (CPC):
**G06V 10/82; G06V 10/764; G06V 20/56**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.04.2024 JP 2024061640**

(71) Applicants:
• **HONDA MOTOR CO., LTD.**
**Tokyo 105-8404 (JP)**

• **Keio University**
**Tokyo, 108-8345 (JP)**

(72) Inventors:
• **HOSOMI, Naoki**
**Wako-shi, Saitama, 3510193 (JP)**
• **SUGIURA, Komei**
**Yokohama-shi, Kanagawa, 2238522 (JP)**

(74) Representative: **Kiwit, Benedikt**
**Mitscherlich PartmbB**
**Patent- und Rechtsanwälte**
**Karlstraße 7**
**80333 München (DE)**

(54) **LEARNING APPARATUS, ESTIMATION APPARATUS, LEARNING METHOD, ESTIMATION METHOD, AND PROGRAM**

(57)   A learning apparatus (100) configured to perform machine learning is provided. The learning apparatus is characterized by comprising: acquisition means configured to acquire teaching data (111) including input data (112) and ground truth data (113), the input data including an input image (202) and an input text (201), the input image including a reference object (203), the input text relatively designating a target position with reference to the reference object; generation means configured to generate output data by inputting the input data to a model (400), the output data being for specifying the target position; and update means configured to update a parameter of the model so as to reduce a loss obtained by inputting the output data and the ground truth data to a loss function (405). The model includes: a first submodel (401) that generates, based on the input image and the input text, a plurality of feature amounts representing the reference object, the plurality of feature amounts having different resolutions from each other; and a second submodel (404) that generates the output data based on the plurality of feature amounts and the input text, and each of the plurality of feature amounts is input to the second submodel.

**FIG. 4**

**Description**

BACKGROUND OF THE INVENTION

Field of the Invention

The present invention relates to a learning apparatus, an estimation apparatus, a learning method, an estimation method, and a program.

Description of the Related Art

Various techniques for performing traveling control of a vehicle by using a model generated by machine learning have been proposed. Japanese Patent Laid-Open No. 2022-513866 describes learning a neural network using sensor data acquired by a vehicle. In addition, a technology of estimating a position in an image indicated by a language using a multimodal model using an image and a language as inputs has also been proposed. As a multimodal model, a Fusion-In-the-Backbone-based transformER (FIBER) (Zi-Yi Dou, et al., "Coarse-to-Fine Vision-Language Pre-training with Fusion in the Backbone", https://arxiv.org/pdf/2206.07643.pdf), a Contrastive Language-Image Pre-training (CLIP) (Alec Radford, et al., "Learning Transferable Visual Models From Natural Language Supervision", https://arxiv.org/pdf/2103.00020.pdf), a Pixel-Word Attention Module (PWAN) (Zhao Yang, et al., "LAVT: Language-Aware Vision Transformer for Referring Image Segmentation", https://arxiv.org/pdf/2112.02244.pdf), and the like have been proposed.

SUMMARY OF THE INVENTION

A target position in an input image may be designated with reference to a reference object included in the input image. The reference object may have different sizes in the input image. According to one aspect of the present invention, a target position designated with reference to a reference object is accurately estimated.

The present invention in its first aspect provides a learning apparatus as specified in claims 1 to 8.

The present invention in its second aspect provides a program as specified in claim 9.

The present invention in its third aspect provides an estimation apparatus as specified in claim 10.

The present invention in its fourth aspect provides a program as specified in claim 11.

The present invention in its fifth aspect provides a method as specified in claim 12.

The present invention in its sixth aspect provides a method as specified in claim 13.

BRIEF DESCRIPTION OF THE DRAWINGS

FIG. 1 is a block diagram for describing a hardware configuration example of a computer according to some embodiments;
FIG. 2 is a schematic diagram for describing an example of input data according to some embodiments;
FIG. 3 is a schematic diagram for describing an example of ground truth data according to some embodiments;
FIG. 4 is a schematic diagram for describing a configuration example of a model according to some embodiments;
FIG. 5 is a schematic diagram describing a configuration example of a feature extraction unit according to some embodiments;
FIG. 6 is a schematic diagram describing a configuration example of a target position estimation unit according to some embodiments;
FIG. 7 is a schematic diagram for describing an example of a loss function according to some embodiments;
FIG. 8 is a flowchart for describing an example of a learning method according to some embodiments; and
FIG. 9 is a flowchart for describing an example of an estimation method according to some embodiments.

DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

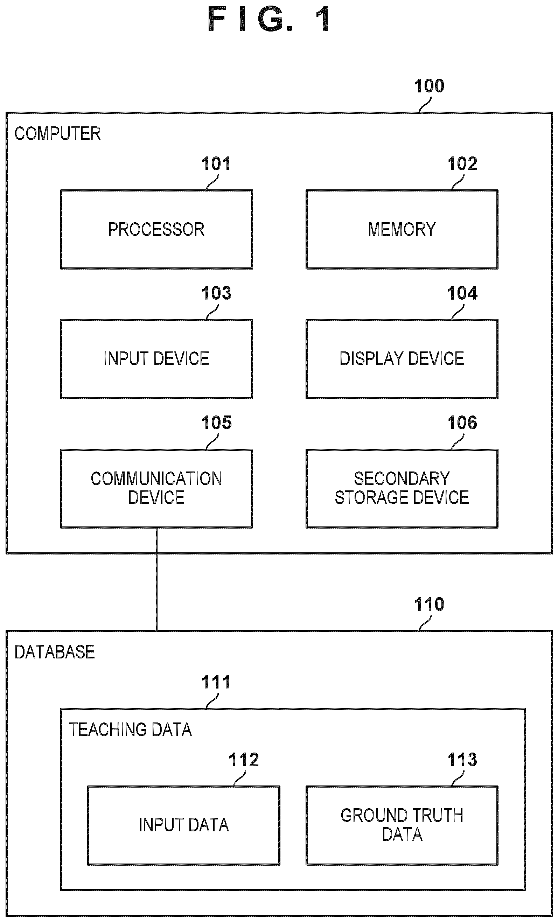

A hardware configuration example of a computer 100 according to some embodiments will be described with reference to FIG. 1. As described in detail below, the computer 100 is used to train a model by machine learning. Thus, the computer 100 may be referred to as a learning apparatus. The computer 100 may be, for example, a server computer or a personal computer (for example, a desktop type or a laptop type). The computer 100 may be a computer resource disposed on a cloud environment.

The computer 100 may include a hardware device illustrated in FIG. 1. A processor 101 controls an overall operation of the computer 100. The processor 101 may be implemented by, for example, a central processing unit (CPU), a graphics processing unit (GPU), or a combination thereof. The processor 101 may be a single processor, or may be a set of a plurality of processors communicatively connected to each other.

A memory 102 stores programs and data used for processing in the computer 100. The memory 102 may be implemented by, for example, a combination of a random access memory (RAM) and a read only memory (ROM).

An input device 103 is a device for acquiring an instruction from a user of the computer 100. The input device 103 may be implemented by, for example, a combination of one or more of a keyboard, a button, a touch pad, and a microphone. A display device 104 is a device for visually presenting information to the user of the computer 100. The display device 104 may be, for example, a dot matrix display such as a liquid crystal display. The computer 100 may include a device (for example, a touch screen) in which the input device 103 and the display device 104 are integrated with each other. The input device 103 and the display device 104 may be provided outside the computer. In this case, the computer 100 may include an interface for communicating with the external input device 103 and the external display device 104.

A communication device 105 is a device for communicating with a device outside the computer 100. In a case where the computer 100 performs wired communication, the communication device 105 may be a network interface card (NIC) including a connector for connecting a cable. In a case where the computer 100 performs wireless communication, the communication device 105 may be a wireless communication module including an antenna and a baseband processing circuit.

A secondary storage device 106 is a device for storing programs and data used for processing in the computer 100 in a nonvolatile manner. The secondary storage device 106 is implemented by, for example, a hard disk drive (HDD) or a solid-state drive (SSD).

The computer 100 may be capable of communicating with an external database 110. The database 110 may store teaching data 111 used for machine learning by the computer 100. The computer 100 may acquire the teaching data 111 from the database 110. Alternatively or additionally, the teaching data 111 may be stored in the secondary storage device 106 of the computer 100. In machine learning, a plurality of pieces of different teaching data 111 are used. Two pieces of teaching data 111 being different may mean that pieces of input data 112 included in the pieces of teaching data 111 are different (for example, at least one of input texts 201 and input images 202 to be described later are different). A part of the pieces of teaching data 111 may be used as verification data and test data.

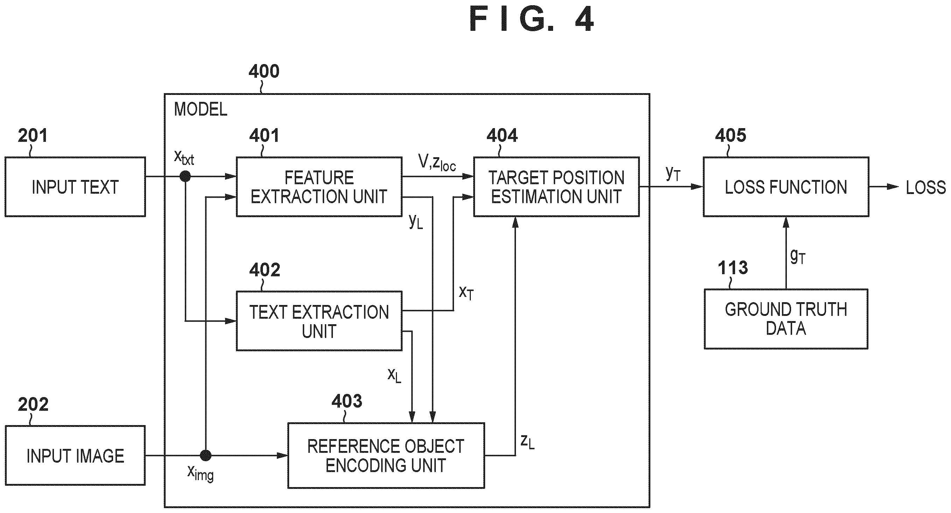

The teaching data 111 includes the input data 112 and ground truth data 113. The input data 112 may be data input to a model in order to train the model (for example, a model 400 of FIG. 4). The ground truth data 113 may be data to be output by the model.

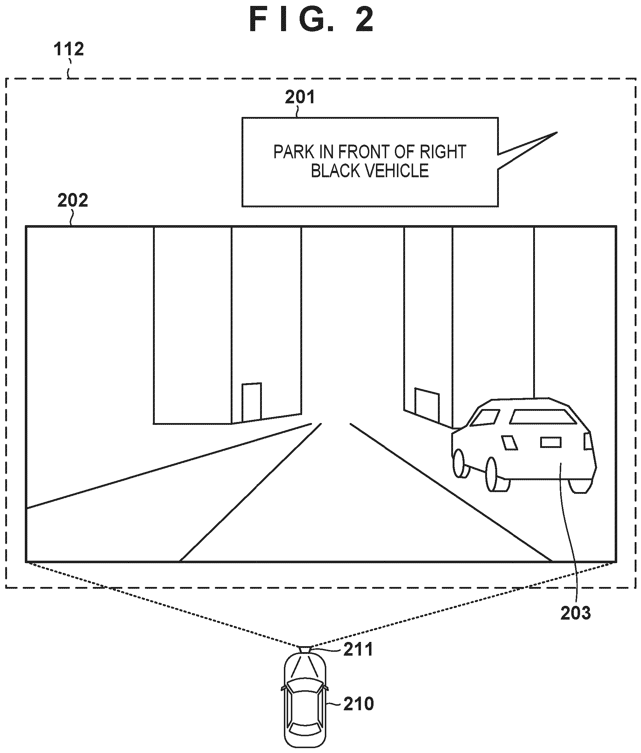

An example of the input data 112 will be described with reference to FIG. 2. The input data 112 may include a pair of the input image 202 that contains a reference object 203 and the input text 201 that relatively designates a target position by referring to the reference object 203. The input text 201 may represent an indication of an operation of a vehicle 210 by an occupant of the vehicle 210.

The input image 202 may be any image including an object. The input image 202 may be an image imaged by a camera 211 of the vehicle 210. For example, the input image 202 may be an image imaged by the camera 211 attached to the vehicle to image the front of the vehicle 210. Alternatively, the input image 202 may be an image imaged by a camera attached to the vehicle to image another direction (for example, rearward) of the vehicle 210. The camera 211 of the vehicle 210 may be the camera 211 attached to the vehicle 210 or a camera (for example, a smartphone of an occupant of the vehicle) brought into the vehicle. The input image 202 may be an image that is not related to the vehicle.

The reference object 203 may be any object included in the input image 202. In the example of FIG. 2, a vehicle is used as the reference object 203. Alternatively, the reference object 203 may be a traffic participant other than a vehicle, a road sign, a traffic light, a guardrail, an intersection, a crosswalk, building, a signboard, or the like.

The input text 201 may be expressed in natural language, for example, "park in front of right black vehicle". In this example, the "right black vehicle" of the input text 201 designates the reference object 203 and the "in front of" of the input text 201 relatively designates a target position with respect to the reference object 203. The input text 201 may be expressed in other forms instead of being expressed in natural language. For example, the input text 201 may be selected from among a plurality of candidates for a combination of a preset reference object and a positional relationship.

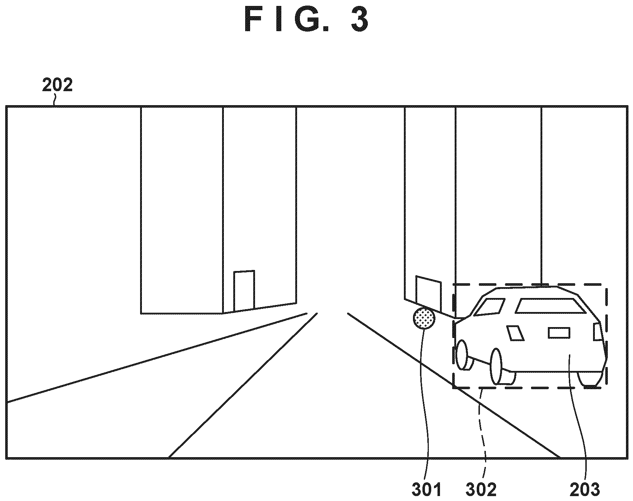

An example of the ground truth data 113 will be described with reference to FIG. 3. The ground truth data 113 may be data for representing a ground truth position of the target position designated by the input text 201. The ground truth data 113 may be manually set for the input data 112 or may be set by the computer. In the following description, the ground truth position of the target position is referred to as a ground truth target position.

The ground truth target position may be represented as a point 301 in the input image 202. Alternatively, the ground truth target position may be represented as a region centered on the point 301. The point 301 may be represented by a coordinate value in a two-dimensional coordinate system set for the input image 202 (hereinafter, simply referred to as a "coordinate system of the input image 202"). The ground truth data 113 may include the coordinate value of the point 301 as the ground truth target position.

The ground truth target position may be specified by the ground truth position of the reference object 203 and a vector extending from the reference object 203 to the target position. In this case, the ground truth data 113 may include the ground truth position of the reference object 203 and the vector extending from the reference object 203 to the target position. The ground truth position of the reference object 203 is referred to as a ground truth reference position. The ground truth reference position may be specified by a region 302. The region 302 may be a rectangle having an outer edge circumscribing the reference object 203. The region 302 may be represented by a center, a width, and a height. The center of the region 302 may be represented by a coordinate value in the coordinate system of the input image 202. Alternatively, the region 302 may be represented by a coordinate value of an upper left corner and a coordinate value of a lower right corner. The region 302 may be other than a rectangle, and may be, for example, a circle. The shape of the region 302 may vary depending on a shape of the reference object 203. The vector extending from the reference object 203 to the target position may be a vector from the center of the region 302 toward the point 301. This vector may be represented by a coordinate value in the coordinate system of the input image 202.

The model 400 on which machine learning is performed by the computer 100 will be described with reference to FIG. 4. The model 400 generates, based on the input data 112, output data for specifying a target position designated by the input text 201. In the following description, the target position specified by the output data of the model 400 is referred to as an estimated target position. The output data may include coordinate values of the estimated target position. Alternatively, the output data may include coordinate values of the position of the reference object 203 and the vector extending from the reference object 203 to the target position. The model 400 may have any structure that influences the output data of the model by both the input text 201 and the input image 202 being processed by a parameter of the model. The model 400 in FIG. 4 is an example of such a model. The parameter of the model includes at least one of a weight and a bias.

In FIG. 4, the input text 201 is represented as $x_{txt}$, the input image 202 is represented as $x_{img}$, the output data of the model 400 is represented as $y_T$, and the ground truth data 113 is represented as $g_T$. Here, $x_{txt}$ is text data such as "park in front of right black vehicle", $x_{img}$ is image data, $x_{img}$ may be color image data or monochrome image data, $x_{img}$ may be represented by three-dimensional array data of H (height) $\times$ W (width) $\times$ C (channel), $y_T$ may be a coordinate value of the estimated target position, and may be represented by, for example, a two-dimensional vector, and $g_T$ may be a coordinate value of the ground truth target position, and may be represented by, for example, a two-dimensional vector.

The output data ($y_T$) output from the model 400 is input to a loss function 405 at the time of training of the model 400. The ground truth data 113 ($g_T$) corresponding to the input data 112 is also input to the loss function 405. The loss function 405 outputs a loss based on an error between the output data and the ground truth data 113.

The model 400 may include a feature extraction unit 401, a text extraction unit 402, a reference object encoding unit 403, and a target position estimation unit 404. The feature extraction unit 401, the text extraction unit 402, the reference object encoding unit 403, and the target position estimation unit 404 may be models that can be trained by machine learning separately. The feature extraction unit 401, the text extraction unit 402, the reference object encoding unit 403, and the target position estimation unit 404 may be respectively called submodels. Each of the submodels may be independently preliminary trained before training of the model 400. In the training of the model 400, parameters of each preliminary trained model may be updated or maintained.

The feature extraction unit 401 generates V, $y_L$, and $z_{loc}$ based on $x_{txt}$ and $x_{img}$. V is a set of a plurality of feature amounts $V_1$ to $V_K$ (K is an integer of 2 or more, for example, K=5), each of the feature amounts representing the reference object 203 included in the input image 202. The plurality of feature amounts $V_1$ to $V_K$ have different resolutions. For example, $V_i$ ($1 \leq i \leq K$) may be represented by three-dimensional array data of $H_i$ (height) $\times$ $W_i$ (width) $\times$ $C_i$ (channel). A size of the three-dimensional array data may be different for each $V_i$. For example, $0.5 \times H_j = H_{j+1}$, $0.5 \times W_j = W_{j+1}$, and $0.5 \times C_j = C_{j+1}$ (on any case, $1 \leq j \leq K-1$) may be satisfied.

Further, $y_L$ represents the position of the reference object 203 included in the input image 202. For example, $y_L$ may be represented by a four-dimensional vector (for example, a coordinate value of the center of the region representing the position of the reference object 203, the height and width of the region, and the like).

Further, $z_{loc}$ represents the position of the reference object 203 included in the input image 202. For example, $z_{loc}$ may be represented by a four-dimensional vector obtained by adding reliability of estimation of $y_L$ by the feature extraction unit 401 and an aspect ratio of the region representing the position of the reference object 203 to $y_L$.

The feature extraction unit 401 may be configured by an arbitrary multimodal model of a hierarchical structure and having an image and a language as inputs. An output of any layer of the feature extraction unit 401 is output from the feature extraction unit 401 as any feature amount ($V_i$) included in V. The feature extraction unit 401 may be trained in advance so as to output the position of the reference object 203 included in the ground truth data 113. An example of a specific configuration of the feature extraction unit 401 will be described later.

The text extraction unit 402 generates $x_L$ and $x_T$ based on $x_{txt}$. Here, $x_L$ is a text representing the reference object 203 included in the input image 202. That is, the text extraction unit 402 extracts the text representing the reference object 203 included in the input image 202 from $x_{txt}$. Further, $x_L$ may be a partial text of $x_{txt}$. For example, when $x_{txt}$ is "park in front of right black vehicle", $x_L$ may be "right black vehicle". Moreover, $x_L$ may be a text other than the partial text of $x_{txt}$.

Further, $x_T$ is a text representing a target position relative to the reference object 203 included in the input image 202. That is, the text extraction unit 402 extracts, from $x_{txt}$, the text representing the target position relative to the reference object 203 included in the input image 202. Further, $x_T$ may be a partial text of $x_{txt}$. For example, when $x_{txt}$ is "park in front of right black vehicle", $x_T$ may be "in front of right black vehicle". Moreover, $x_T$ may be a text other than the partial text of $x_{txt}$.

The text extraction unit 402 may be constructed with an arbitrary language model. For example, the text extraction unit 402 may be a large-scale language model such as GPT4. The text extraction unit 402 may acquire $x_L$ by inputting a prompt such as "Please extract information representing an object included in the text "park in front of right black vehicle"." to the language model. The same applies to $x_T$.

The reference object encoding unit 403 generates $z_L$ based on $x_{img}$, $x_L$, and $y_L$. Further, $z_L$ is a feature amount representing the reference object 203 included in the input image 202. For example, $z_L$ may be represented by a 1024 dimensional vector. The reference object encoding unit 403 may be trained in advance such that an output obtained by inputting the feature amount output from the reference object encoding unit 403 to an output layer represents a type and a position of the reference object 203 included in the ground truth data 113.

The reference object encoding unit 403 includes a pre-processing unit and a multimodal unit. The pre-processing unit extracts, as a partial image, a region indicated by $y_L$ in $x_{img}$. This partial image is a portion including the reference object 203 in the input image 202. Thereafter, the multimodal unit generates $z_L$ based on the partial image extracted by the pre-processing unit and on $x_L$. The multimodal unit may be configured by, for example, CLIP. As described above, by using the partial image obtained by extracting the reference object 203 from the input image 202 and the text ($x_L$) obtained by extracting the information representing the reference object 203 from the input text ($x_{txt}$), accuracy of estimation by the multimodal unit is improved.

In the model 400 of FIG. 4, the reference object encoding unit 403 may not include the pre-processing unit. In this case, the multimodal unit may generate $z_L$ based on $x_{img}$ and $x_L$. In this case, the feature extraction unit 401 may not generate $y_L$. Instead of the example of FIG. 4, the reference object encoding unit 403 may use $x_{txt}$ instead of $x_L$. In this case, the text extraction unit 402 may not generate $x_L$.

The target position estimation unit 404 generates $y_T$ based on V, $z_{loc}$, $x_T$, and $z_L$. As described above, $x_T$ is based on the input text 201 ($x_{txt}$). Therefore, $y_T$ is generated based on $x_{txt}$. Each of $V_1$ to $V_K$ is input to the target position estimation unit 404. An example of a specific configuration of the feature extraction unit 401 will be described later.

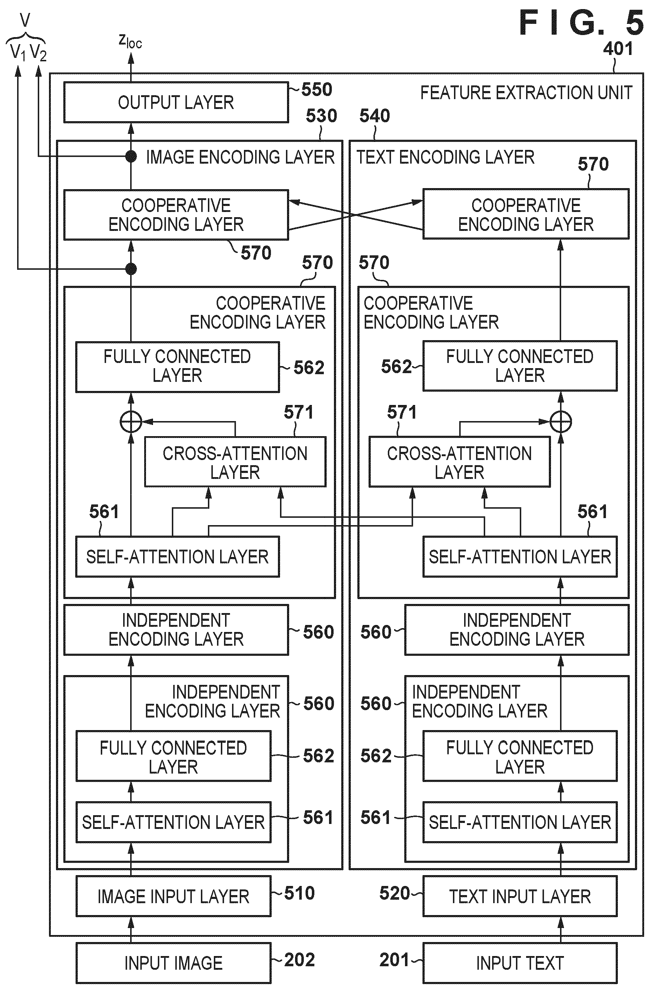

Referring to FIG. 5, a configuration example of the feature extraction unit 401 will be described. The feature extraction unit 401 has a configuration similar to that of the FIBER, and may be different from the FIBER in that the feature extraction unit 401 further outputs V. The feature extraction unit 401 includes an image input layer 510, a text input layer 520, an image encoding layer 530, a text encoding layer 540, and an output layer 550. The image input layer 510 converts the input image 202 into a format to be input to the image encoding layer 530. For example, the image input layer 510 converts the input image 202 into a plurality of vectors. For example, the image input layer 510 may divide the input image 202 into a plurality of patch images and may rearrange pixel values of the patch images into one-dimensional vectors.

The image encoding layer 530 encodes the input image 202 (specifically, input image 202 expressed as the plurality of vectors) input from the image input layer 510. A specific configuration of the image encoding layer 530 will be described later. The output layer 550 generates $z_{loc}$ based on the data encoded by the image encoding layer 530. As will be described later, a matrix in which a plurality of row vectors are combined is output from the image encoding layer 530. The output layer 550 may calculate $z_{loc}$ by multiplying the output matrix by a weight matrix from the right. Further, the output layer 550 outputs a part of components of $z_{loc}$ as $y_L$.

A specific configuration of the image encoding layer 530 will be described. The image encoding layer 530 may include one or more independent encoding layers 560 (two in the example of FIG. 5) and one or more cooperative encoding layers 570 (two in the example of FIG. 5). In a case where the image encoding layer 530 includes a plurality of independent encoding layers 560, these independent encoding layers may be connected in series. In a case where the image encoding layer 530 includes a plurality of cooperative encoding layers 570, the cooperative encoding layers may be connected in series. The one or more independent encoding layers 560 may be collectively disposed in a first half of the image encoding layer 530, and the one or more cooperative encoding layers 570 may be collectively disposed in a second half of the image encoding layer 530. Alternatively, the independent encoding layers 560 and the cooperative encoding layers 570 may be disposed in a mixed manner.

The independent encoding layers 560 included in the image encoding layer 530 encode a plurality of vectors input from a previous layer in the image encoding layer 530 without using, as inputs, feature amounts determined by the text encoding layer 540. The independent encoding layer 560 may include a self-attention layer 561 and a fully connected layer 562.

The plurality of vectors input to the independent encoding layers 560 are converted into a plurality of different vectors by the self-attention layers 561. The plurality of vectors output from the self-attention layer 561 are converted into a plurality of different vectors by the fully connected layer 562. The plurality of vectors output from the fully connected layers 562 are output from the independent encoding layer 560. Each of a plurality of output vectors of the self-attention layer 561 represents a relationship of another input vector with respect to each input vector in the plurality of input vectors of the self-attention layer 561.

The fully connected layer 562 outputs a plurality of different vectors by connecting all of the plurality of input vectors. For example, the fully connected layer 562 multiplies the matrix Y output from the self-attention layer 561 by the weight matrix from the right, and adds a bias vector to each row of the resulting matrix. The weight matrix and the bias vector are parameters determined by machine learning. Thereafter, the fully connected layer 562 outputs a matrix obtained by applying an activation function to each element of the matrix calculated in this manner. The weight matrix of the fully connected layer 562 has such a size that the matrix output from the fully connected layer 562 (that is, the matrix output from the independent encoding layer 560) has the same size as the input matrix of the next independent encoding layer 560.

The cooperative encoding layer 570 included in the image encoding layer 530 uses, as additional inputs, the feature amounts determined by the text encoding layer 540 to encode each of the plurality of vectors input from the previous layer in the image encoding layer 530. The cooperative encoding layer 570 may further include a cross-attention layer 571 in addition to the self-attention layer 561 and the fully connected layer 562 described above.

The plurality of vectors input to the cooperative encoding layer 570 are converted into a plurality of different vectors by the self-attention layer 561. A part of the feature amounts determined by the self-attention layer 561 is input to the cross-attention layer 571. A part of the feature amounts determined by the cooperative encoding layer 570 (specifically, the self-attention layer 561) included in the text encoding layer 540 is also input to the cross-attention layer 571. The cross-attention layer 571 generates and outputs a plurality of vectors based on these inputs.

The plurality of vectors output from the self-attention layer 561 and the plurality of vectors output from the cross-attention layer 571 are added and input to the fully connected layer 562. The fully connected layer 562 converts the plurality of input vectors into a plurality of different vectors. The plurality of vectors output from the fully connected layer 562 are output from the cooperative encoding layer 570.

Each of the plurality of output vectors of the cross-attention layer 571 represents a relationship of each of the plurality of output vectors from the self-attention layer 561 included in the image encoding layer 530 with respect to each vector of the plurality of output vectors from the self-attention layer 561 included in the text encoding layer 540.

An output of one of the one or more independent encoding layers 560 and the one or more cooperative encoding layers 570 included in the image encoding layer 530 is output as $V_i$ from the feature extraction unit 401. In the example of FIG. 5, an output from the cooperative encoding layer 570 at the most upstream (that is, close to the image input layer 510) is output as $V_1$, and an output from the cooperative encoding layer 570 at the second upstream is output as $V_2$. $V_1$ and $V_2$ have different resolutions. For example, $V_1$ and $V_2$ have different data sizes from each other. In the example of FIG. 5, V is configured by two feature amounts, but the number of feature amounts included in V is not limited thereto.

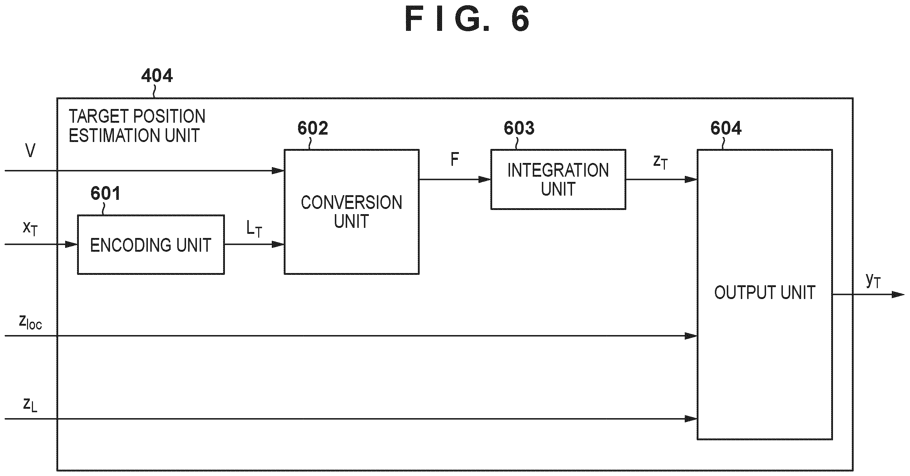

Referring to FIG. 6, a configuration example of the target position estimation unit 404 will be described. The target position estimation unit 404 may include an encoding unit 601, a conversion unit 602, an integration unit 603, and an output unit 604. Each of these components may include parameters determined by machine learning.

The encoding unit 601 generates $L_T$ based on $x_T$. Specifically, the encoding unit 601 generates $L_T$ by encoding $x_T$. $L_T$ is a feature amount representing the text data ($x_T$). $L_T$ may be represented by two-dimensional array data of D (dimension of feature amount) × T (maximum token length). The encoding unit 601 may be configured by an arbitrary language model, and, for example, may be configured by BERT (Bidirectional Encoder Representations from Transformers) or RoBERTa (Robustly Optimized BERT Pretraining Approach).

The conversion unit 602 generates F based on V and $L_T$. F is a set of a plurality of intermediate feature amounts $F_1$ to $V_K$ (K is an integer of 2 or more, for example, K=5), each of the feature amounts representing the target position. The conversion unit 602 converts $V_i$ into $F_i$ using $L_T$ for each i ($1 \leq i \leq K$). $F_i$ may have the same resolution (for example, the data size) as $V_i$. In this case, the plurality of intermediate feature amounts $F_1$ to $F_K$ have different resolutions from each other. For example, $F_i$ ($1 \leq i \leq K$) is represented by three-dimensional array data of $H_i$ (height) × $W_i$ (width) × $C_i$ (channel). The conversion unit 602 may convert $V_i$ independently (that is, without using $V_j (j \neq i)$) into $F_i$ for each i ($1 \leq i \leq K$).

The conversion unit 602 may be configured by, for example, PWAM. For example, the conversion unit 602 may convert $V_i$ into $F_i$ using the following equations.

$$Q_{iq} = \text{flatten}(w_{iq}(V_i)),$$

$$L_{ik} = w_{ik}(L_T),$$

$$L_{iv} = w_{iv}(L_T),$$

$$G'_i = \text{softmax}(C_i^{-1/2}\ {}^tQ_{iq}L_{ik})^tL_{iv},$$

$$G_i = w_{iw}(unflatten(^tG'_i)),$$

$$V_{im} = w_{im}(V_i),$$

$$F_i = w_{io}(V_{im} * G_i).$$

Here, "$w_{iq}$", "$w_{ik}$", "$w_{iv}$", and "$w_{iw}$" each represent a $1 \times 1$ convolution operation. Each of "$w_{im}$" and "$w_{io}$" represents a projection function, and may be an operation of inputting to an activation function (for example, ReLU) after the $1 \times 1$ convolution operation. Here, "$t$" represents a transposition operation. "$C_i$" represents the number of channels. Further, "flatten()" represents a function of flattening a multi-dimensional array into a one-dimensional array. Further, "unflatten ()" represents an inverse function of flatten(). Further, "softmax()" represents a softmax function. Further, "*" represents multiplication in units of elements. In the above equations, variables including "i" in the index may include a parameter different for each $F_i$. In the above equations, the conversion unit 602 couples $V_i$ to $L_T$ at a pixel level.

The integration unit 603 generates $z_T$ by integrating the respective elements of F, that is, $F_1$ to $F_K$. For example, the integration unit 603 may perform general-purpose average pooling on each element of F and then connect these elements. For example, $z_T$ is represented by a vector of $(\Sigma C_i (i=1, ..., K))$ dimensions.

The output unit 604 generates $y_T$ based on $z_T$, $z_{loc}$, and $z_L$. The output unit 604 may include, for example, a multilayer perceptron. For example, $z_T$, $z_{loc}$, and $z_L$ may be input to the multilayer perceptron as separate channels.

According to the model 400 described above, the target position is estimated based on the feature amounts $V_1$ to $V_K$ having a plurality of resolutions representing the reference object 203. Therefore, even when the target position is designated with reference to the reference object 203 that may have various sizes, the target position can be accurately estimated.

In the model 400 described above, the target position estimation unit 404 may not be based on $z_{loc}$, and may be based on $y_L$ instead of $z_{loc}$. In this case, the feature extraction unit 401 may not generate $z_{loc}$. In the model 400 described above, the target position estimation unit 404 may not be based on $z_L$. In this case, the reference object encoding unit 403 may be omitted. In the model 400 described above, the target position estimation unit 404 may be based on $x_{txt}$ instead of $x_T$. In this case, the text extraction unit 402 may not generate $x_T$.

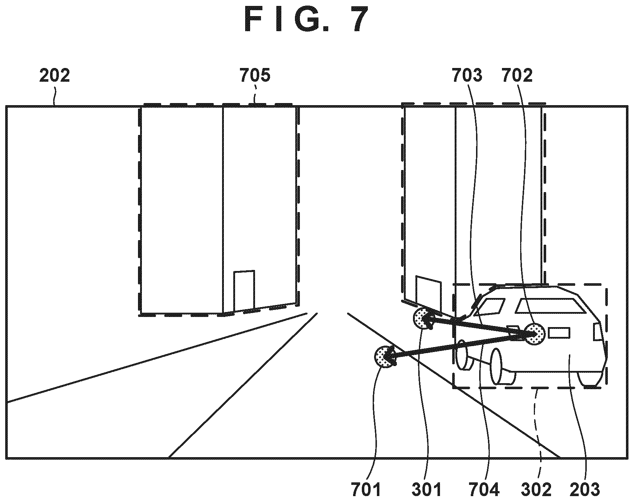

Referring now to FIG. 7, the loss function 405 used in some embodiments is described. As described in FIG. 3, the ground truth data 113 may include the point 301 representing the ground truth target position in the input image 202 and the region 302 representing the ground truth reference position of the reference object 203 in the input image 202. Further, the ground truth data 113 may include a penalty area 705 in the input image 202. The penalty area 705 may be a set of positions that should not be estimated as the target position.

In FIG. 7, the target position specified by the output data of the model 400, that is, the estimated target position is represented by a point 701. The center of the region 302 is represented by a point 702. The point 702 is based on the ground truth reference position of the reference object 203. A vector extending from the point 702 to the point 301 is represented as a ground truth vector 703. The ground truth vector 703 is a vector having a point based on the ground truth reference position of the reference object 203 as a start point and the ground truth target position as an end point. A vector extending from the point 702 to the point 701 is represented as an estimated vector 704. The estimated vector 704 is a vector having a point based on the ground truth reference position of the reference object 203 as a start point and an estimated target position as an end point.

The loss function 405 may calculate a loss L using the following equation.

$$L = \lambda_d L_d + \lambda_a L_a + \lambda_n L_n + \lambda_p L_p.$$

Here, "$\lambda_d$", "$\lambda_a$", "$\lambda_n$" and "$\lambda_p$" are positive constants, respectively, and may be determined as hyperparameters. "$L_d$", "$L_a$", "$L_n$", and "$L_p$" are losses determined based on the output data from the model 400 and the ground truth data 113, respectively. Each loss will be described in detail below.

$L_d$ is a loss based on a distance between the ground truth target position (point 301) and the estimated target position (point 701). For example, $L_d$ may be the distance between the point 301 and the point 701, or may be a result of applying some function to this distance. The distance between the point 301 and the point 701 may be $L_2$ norm, smooth $L_1$ norm, or another distance.

$L_a$ is a loss based on an angle formed by the ground truth vector 703 and the estimated vector 704. For example, $L_a$ may be the angle formed by the ground truth vector 703 and the estimated vector 704, or may be a result of applying some function to this angle. The angle formed by the ground truth vector 703 and the estimated vector 704 may be calculated by applying the inverse cosine function to an inner product of the unit vectors of the respective vectors.

$L_n$ is a loss based on a difference between the size of the ground truth vector 703 and the size of the estimated vector 704. For example, $L_n$ may be the difference between the size of the ground truth vector 703 and the size of the estimated vector 704, or may be a result of applying some function to this difference. A magnitude of each vector may be, for example, $L_2$ norm.

$L_p$ is a loss based on whether or not the estimated target position is included in the penalty area 705. $L_p$ in a case where the estimated target position is included in the penalty area 705 may be larger than $L_p$ in a

case where the estimated target position is not included in the penalty area 705. The penalty area 705 may include the reference object 203. For example, $L_p$ may also be calculated taking the region 302 representing the ground truth position of the reference object 203 as a part of the penalty area 705.

As described above, the loss function 405 includes not only the loss ($L_d$) explicitly comparing the ground truth target position and the estimated target position, but also the loss ($L_a$ and $L_n$) explicitly representing the relationship with the ground truth position of the reference object 203. As a result, the model 400 can be trained so that the target position can be accurately estimated. Specifically, the loss ($L_a$ and $L_n$) explicitly representing the relationship with the ground truth position of the reference object 203 is based on the difference between the ground truth vector 703 and the estimated vector 704. As described above, the difference between the ground truth vector 703 and the estimated vector 704 may include the angle between the ground truth vector 703 and the estimated vector 704, may include the difference between the size of the ground truth vector 703 and the size of the estimated vector 704, or may include both of them. In addition, the loss function 405 includes the loss ($L_p$) based on the penalty area 705. This makes it possible to prevent an inappropriate position from being estimated as the target position.

In the loss function 405, the loss L is given as a sum of four terms of a constant multiple of "$L_d$", "$L_a$", "$L_n$", and "$L_p$". Alternatively, the loss L may include only a part of the terms of "$L_d$", "$L_a$", "$L_n$", and "$L_p$". For example, $L = \lambda_a L_a + \lambda_n L_n$ may be satisfied.

In the loss function 405 described above, the point 702 based on the ground truth position of the reference object 203 is used as the start point of the ground truth vector 703 and the estimated vector 704. Alternatively, a point independent of the ground truth position of the reference object 203, for example, the center of the input image 202 may be used as the start point of the ground truth vector 703 and the estimated vector 704.

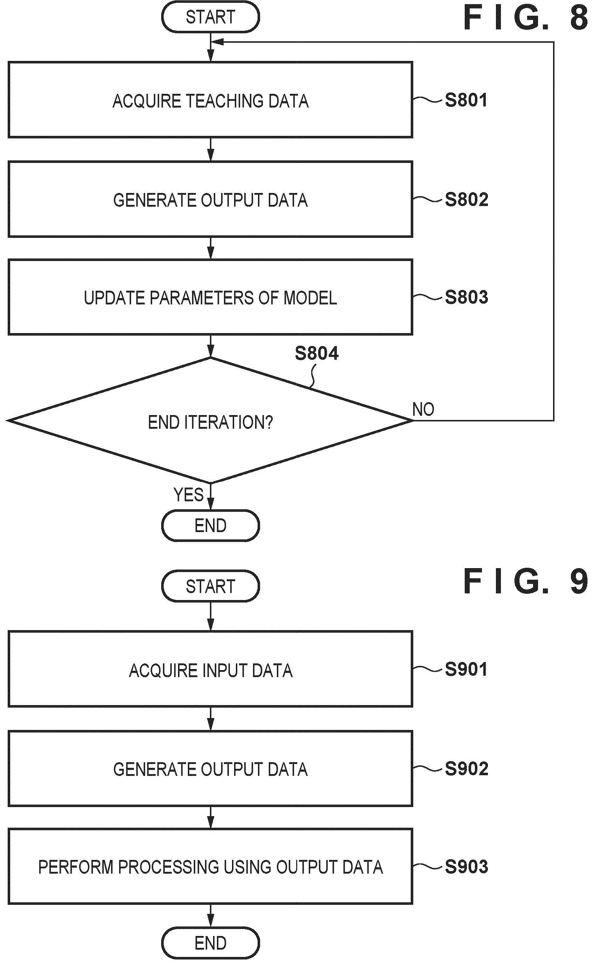

An example of a learning method for training the model 400 will be described with reference to FIG. 8. Each step of the method of FIG. 8 may be performed, for example, by the processor 101 of the computer 100 executing a program read into the memory 102. Alternatively, some or all of the steps of the method of FIG. 8 may be performed by a dedicated circuit such as an application-specific integrated circuit (ASIC). At the start of FIG. 8, the parameters of the model 400 may be randomly set values or values determined by preliminary training.

In S801, the computer 100 acquires one piece of teaching data 111. The teaching data 111 may be read from the database 110 at this point in time, or may be stored in the secondary storage device 106 in advance. Instead of using the pieces of teaching data 111 one by one, the plurality of pieces of teaching data 111 may be collectively used as a batch.

In S802, the computer 100 generates the output data by inputting the input data 112 included in the teaching data 111 acquired in S801 to the model 400. As described above, the output data is data for specifying the target position (for example, point 301).

In S803, the computer 100 updates the parameters of the model 400 to reduce the loss obtained by inputting the output data generated in S802 and the ground truth data 113 included in the teaching data 111 acquired in S801 to the loss function 405. The parameters may be updated by using an existing method such as Adam. For example, the estimated target position included in the output data and the ground truth target position included in the ground truth data 113 are input to the loss function 405.

In S804, the computer 100 determines whether or not a condition for ending iteration of the parameter update (hereinafter, referred to as end condition) is satisfied. In a case where it is determined that the end condition is satisfied ("YES" in S804), the computer ends the processing, and otherwise ("NO" in S804), the processing proceeds to S801. The end condition may be that the parameter is updated a predetermined number of times (that is, S804 is executed). After the processing of FIG. 8 is executed, the computer 100 may store the trained model 400 in the secondary storage device 106 for future processing, or may transmit the model to another device (for example, the database 110).

Next, an example of an estimation method for estimating the target position by using the model 400 will be described with reference to FIG. 9. The estimation method of FIG. 9 may be executed by the computer 100, for example. Therefore, the computer 100 may be referred to as an estimation apparatus. The computer 100 executing the estimation method of FIG. 9 may be different from the computer 100 executing the learning method of FIG. 8. Each step of the method of FIG. 9 may be performed, for example, by the processor 101 of the computer 100 executing a program read into the memory 102. Alternatively, some or all of the steps in the method of FIG. 9 may be performed by a dedicated circuit such as an ASIC. At a start point in time of FIG. 9, it is assumed that the trained model 400 is available to the computer 100. For example, the trained model 400 may be stored in the secondary storage device 106 of the computer 100.

In S901, the computer 100 acquires the input data to be input to the model 400. The input data may include a pair of the input image 202 that contains a reference object 203 and the input text 201 that relatively designates a target position by referring to the reference object 203. The vehicle according to some embodiments acquires a voice input from an occupant through a microphone and converts the voice input into the input text 201. The vehicle acquires the input image 202 by imaging a landscape in front of the vehicle in response to the acquisition of the voice input.

In S902, the computer 100 generates the output data by inputting the input image acquired in S901 to the model 400. As described above, the output data of the model 400 includes information for specifying the target position. The computer 100 specifies the target position using the output data of the model 400.

In S903, the computer 100 performs processing using the target position specified in S902. For example, the vehicle executes processing designated by the voice input with respect to the target position. For example, in a case where an instruction "park in front of right black vehicle" is issued by voice input, the vehicle specifies a position in front of the right black vehicle as the target position, and controls traveling of the vehicle to stop at the target position.

In the above description of FIG. 9, the model 400 is used by the vehicle. Alternatively, the model 400 may be used by other devices. For example, in addition to traveling of the vehicle, the model 400 can also be used for operation of a robot or the like. In this case, an image imaged by a camera provided in the robot instead of the vehicle may be input to the model 400 to specify the target position included in the user's instruction. For example, when an instruction such as "place a cup in front of the right black box" is issued by voice input, the robot specifies a position in front of the black box as the target position as in the case of the vehicle. Thereafter, the robot controls the actuator of the robot so as to place the gripped object (cup) at the target position.

<Summary of Embodiments>

[Item 1]

A learning apparatus (100) configured to perform machine learning, the learning apparatus characterized by comprising:

acquisition means configured to acquire teaching data (111) including input data (112) and ground truth data (113), the input data including an input image (202) and an input text (201), the input image including a reference object (203), the input text relatively designating a target position with reference to the reference object;
generation means configured to generate output data by inputting the input data to a model (400), the output data being for specifying the target position; and
update means configured to update a parameter of the model so as to reduce a loss obtained by inputting the output data and the ground truth data to a loss function (405), wherein
the model includes:

a first submodel (401) that generates, based on the input image and the input text, a plurality of feature amounts representing the reference object, the plurality of feature amounts having different resolutions from each other; and
a second submodel (404) that generates the output data based on the plurality of feature amounts and the input text, and

each of the plurality of feature amounts is input to the second submodel.

According to this item, it is possible to generate a model that accurately estimates a target position designated with reference to a reference object.

[Item 2]

The learning apparatus according to Item 1, wherein

the model further includes a third submodel (402) that extracts, from the input text, a text representing the target position relative to the reference object, and
the second submodel generates the output data based on each of the plurality of feature amounts and on the text extracted by the third submodel.

According to this item, it is possible to generate a model that estimates the target position designated with reference to the reference object with higher accuracy.

[Item 3]

The learning apparatus according to Item 1 or 2, wherein

the model further includes:

a third submodel (402) that extracts, from the input text, a text representing the reference object; and
a fourth submodel (403) that generates a feature amount representing the reference object based on the input image and on the text extracted by the third submodel, and

the second submodel generates the output data based further on the feature amount generated by the fourth submodel.

According to this item, it is possible to generate a model that estimates the target position designated with reference to the reference object with higher accuracy.

[Item 4]

The learning apparatus according to Item 3, wherein

the first submodel further generates data representing a position (302) of the reference object based on the input image and the input text, and the fourth submodel generates the feature amount representing the reference object based further on the data generated by the first submodel.

According to this item, it is possible to generate a model that estimates the target position designated with reference to the reference object with higher accuracy.

[Item 5]

The learning apparatus according to any one of Items 1-4, wherein

the first submodel further generates data representing a position (302) of the reference object based on the input image and the input text, and the second submodel generates the output data based further on the data generated by the first submodel.

According to this item, it is possible to generate a model that estimates the target position designated with reference to the reference object with higher accuracy.

[Item 6]

The learning apparatus according to any one of Items 1-5, wherein

the model further includes:

a third submodel (402) that extracts, from the input text, a text representing the reference object; and a fourth submodel (403) that generates a feature amount representing the reference object based on the input image and on the text extracted by the third submodel,

the first submodel further generates data representing a position (302) of the reference object based on the input image and the input text, and the second submodel:

generates a plurality of intermediate feature amounts by respectively converting the plurality of feature amounts based on the input text; and generates the output data based on each of the plurality of intermediate feature amounts, the data generated by the first submodel, and the feature amount generated by the fourth submodel.

According to this item, it is possible to generate a model that estimates the target position designated with reference to the reference object with higher accuracy.

[Item 7]

The learning apparatus according to any one of Items 1-6, wherein the input image includes an image imaged by a camera (211) of a vehicle (210).

According to this item, it is possible to generate a model that accurately estimates a target position suitable for vehicle control.

[Item 8]

The learning apparatus according to any one of Items 1-7, wherein the input text is expressed by a natural language.

According to this item, it is possible to generate a model that accurately estimates a target position designated in a natural language.

[Item 9]

A program for causing a computer to function as the learning apparatus according to any one of Items 1-8.

According to this item, the above-described effects can be obtained in the form of a program.

[Item 10]

An estimation apparatus (100) configured to estimate a target position, the estimation apparatus characterized by comprising:

acquisition means configured to acquire input data (112), the input data including an input image (202) and an input text (201), the input image including a reference object (203), the input text relatively designating a target position with reference to the reference object; and generation means configured to generate output data by inputting the input data to a model (400), the output data being for specifying the target position, wherein the model includes:

a first submodel (401) that generates, based on the input image and the input text, a plurality of feature amounts representing the reference object, the plurality of feature amounts having different resolutions from each other; and a second submodel (404) that generates the output data based on the plurality of feature amounts and the input text, and

each of the plurality of feature amounts is input to the second submodel.

According to this item, a target position designated with reference to a reference object can be accurately estimated.

[Item 11]

A program for causing a computer to function as the estimation apparatus according to Item 10.

According to this item, the above-described effects can be obtained in the form of a program.

[Item 12]

A method of performing machine learning, the method characterized by comprising:

acquiring (S801) teaching data (111) including input data (112) and ground truth data (113), the input data including an input image (202) and an input text (201), the input image including a reference object (203), the input text relatively designating a target position with reference to the reference object;
generating (S802) output data by inputting the input data to a model (400), the output data being for specifying the target position; and
updating (S803) a parameter of the model so as to reduce a loss obtained by inputting the output data and the ground truth data to a loss function (405), wherein
the model includes:

a first submodel (401) that generates, based on the input image and the input text, a plurality of feature amounts representing the reference object, the plurality of feature amounts having different resolutions from each other; and
a second submodel (404) that generates the output data based on the plurality of feature amounts and the input text, and
each of the plurality of feature amounts is input to the second submodel.

According to this item, it is possible to generate a model that accurately estimates the target position designated with reference to the reference object.

[Item 13]

A method of estimating a target position, the method characterized by comprising:

acquiring (S901) input data (112), the input data including an input image (202) and an input text (201), the input image including a reference object (203), the input text relatively designating a target position with reference to the reference object; and
generating (S902) output data by inputting the input data to a model (400), the output data being for specifying the target position, wherein
the model includes:

a first submodel (401) that generates, based on the input image and the input text, a plurality of feature amounts representing the reference object, the plurality of feature amounts having different resolutions from each other; and
a second submodel (404) that generates the output data based on the plurality of feature amounts and the input text, and

each of the plurality of feature amounts is input to the second submodel.

According to this item, a target position designated with reference to a reference object can be accurately estimated.

The invention is not limited to the foregoing embodiments, and various variations/changes are possible within the spirit of the invention.

**Claims**

1. A learning apparatus (100) configured to perform machine learning, the learning apparatus **characterized by** comprising:

acquisition means configured to acquire teaching data (111) including input data (112) and ground truth data (113), the input data including an input image (202) and an input text (201), the input image including a reference object (203), the input text relatively designating a target position with reference to the reference object;
generation means configured to generate output data by inputting the input data to a model (400), the output data being for specifying the target position; and
update means configured to update a parameter of the model so as to reduce a loss obtained by inputting the output data and the ground truth data to a loss function (405), wherein
the model includes:

a first submodel (401) that generates, based on the input image and the input text, a plurality of feature amounts representing the reference object, the plurality of feature amounts having different resolutions from each other; and
a second submodel (404) that generates the output data based on the plurality of feature amounts and the input text, and

each of the plurality of feature amounts is input to the second submodel.

2. The learning apparatus according to claim 1, wherein

the model further includes a third submodel (402) that extracts, from the input text, a text representing the target position relative to the reference object, and
the second submodel generates the output data based on each of the plurality of feature amounts and on the text extracted by the third submodel.

3. The learning apparatus according to claim 1 or 2, wherein

the model further includes:

a third submodel (402) that extracts, from the input text, a text representing the reference object; and
a fourth submodel (403) that generates a feature amount representing the reference object based on the input image and on the text extracted by the third submodel, and

the second submodel generates the output data based further on the feature amount generated by the fourth submodel.

4. The learning apparatus according to claim 3, wherein

the first submodel further generates data representing a position (302) of the reference object based on the input image and the input text, and
the fourth submodel generates the feature amount representing the reference object based further on the data generated by the first submodel.

5. The learning apparatus according to any one of claims 1-4, wherein

the first submodel further generates data representing a position (302) of the reference object based on the input image and the input text, and
the second submodel generates the output data based further on the data generated by the first submodel.

6. The learning apparatus according to any one of claims 1-5, wherein

the model further includes:

a third submodel (402) that extracts, from the input text, a text representing the reference object; and
a fourth submodel (403) that generates a feature amount representing the reference object based on the input image and on the text extracted by the third submodel,

the first submodel further generates data representing a position (302) of the reference object based on the input image and the input text, and
the second submodel:

generates a plurality of intermediate feature amounts by respectively converting the plurality of feature amounts based on the input text; and
generates the output data based on each of the plurality of intermediate feature amounts, the data generated by the first submodel, and the feature amount generated by the fourth submodel.

7. The learning apparatus according to any one of claims 1-6, wherein
the input image includes an image imaged by a camera (211) of a vehicle (210).

8. The learning apparatus according to any one of claims 1-7, wherein
the input text is expressed by a natural language.

9. A program for causing a computer to function as the learning apparatus according to any one of claims 1-8.

10. An estimation apparatus (100) configured to estimate a target position, the estimation apparatus **characterized by** comprising:

acquisition means configured to acquire input data (112), the input data including an input image (202) and an input text (201), the input image including a reference object (203), the input text relatively designating a target position with reference to the reference object; and
generation means configured to generate output data by inputting the input data to a model (400), the output data being for specifying the target position, wherein
the model includes:

a first submodel (401) that generates, based on the input image and the input text, a plurality of feature amounts representing the reference object, the plurality of feature amounts having different resolutions from each other; and

a second submodel (404) that generates the output data based on the plurality of feature amounts and the input text, and

each of the plurality of feature amounts is input to the second submodel.

11. A program for causing a computer to function as the estimation apparatus according to claim 10.

12. A method of performing machine learning, the method **characterized by** comprising:

acquiring (S801) teaching data (111) including input data (112) and ground truth data (113), the input data including an input image (202) and an input text (201), the input image including a reference object (203), the input text relatively designating a target position with reference to the reference object;

generating (S802) output data by inputting the input data to a model (400), the output data being for specifying the target position; and

updating (S803) a parameter of the model so as to reduce a loss obtained by inputting the output data and the ground truth data to a loss function (405), wherein

the model includes:

a first submodel (401) that generates, based on the input image and the input text, a plurality of feature amounts representing the reference object, the plurality of feature amounts having different resolutions from each other; and

a second submodel (404) that generates the output data based on the plurality of feature amounts and the input text, and each of the plurality of feature amounts is input to the second submodel.

13. A method of estimating a target position, the method **characterized by** comprising:

acquiring (S901) input data (112), the input data including an input image (202) and an input text (201), the input image including a reference object (203), the input text relatively designating a target position with reference to the reference object; and

generating (S902) output data by inputting the input data to a model (400), the output data being for specifying the target position, wherein the model includes:

a first submodel (401) that generates, based on the input image and the input text, a plurality of feature amounts representing the reference object, the plurality of feature amounts having different resolutions from each other; and

a second submodel (404) that generates the output data based on the plurality of feature amounts and the input text, and

each of the plurality of feature amounts is input to the second submodel.

# F I G. 1

100

**COMPUTER**

101
**PROCESSOR**

102
**MEMORY**

103
**INPUT DEVICE**

104
**DISPLAY DEVICE**

105
**COMMUNICATION DEVICE**

106
**SECONDARY STORAGE DEVICE**

110
**DATABASE**

111
**TEACHING DATA**

112
**INPUT DATA**

113
**GROUND TRUTH DATA**

# FIG. 2

201

PARK IN FRONT OF RIGHT
BLACK VEHICLE

# F I G. 3

202

301  302  203

# F I G. 4

EP 4 629 188 A1

**F I G. 5**

401

# F I G. 6

# F I G. 7

**FIG. 8**

START

ACQUIRE TEACHING DATA — S801

GENERATE OUTPUT DATA — S802

UPDATE PARAMETERS OF MODEL — S803

S804

END ITERATION? — NO

YES

END

**FIG. 9**

START

ACQUIRE INPUT DATA — S901

GENERATE OUTPUT DATA — S902

PERFORM PROCESSING USING OUTPUT DATA — S903

END

## EUROPEAN SEARCH REPORT

**Application Number**

EP 25 16 7613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LICHENG YU ET AL: "MAttNet: Modular Attention Network for Referring Expression Comprehension", ARXIV.ORG, CORNELL UNIVERSITY LIBRARY, 201 OLIN LIBRARY CORNELL UNIVERSITY ITHACA, NY 14853, 24 January 2018 (2018-01-24), XP081222667, * sections 1-3; page 1 - page 5 * | 1-13 | INV. G06V10/764 G06V10/82 G06V20/56 |
| X | DAQING LIU ET AL: "Explainability by Parsing: Neural Module Tree Networks for Natural Language Visual Grounding", ARXIV.ORG, CORNELL UNIVERSITY LIBRARY, 201 OLIN LIBRARY CORNELL UNIVERSITY ITHACA, NY 14853, 8 December 2018 (2018-12-08), XP080990609, * sections 1-3; page 1 - page 6 * | 1-13 | |

**TECHNICAL FIELDS SEARCHED (IPC)**

G06V

The present search report has been drawn up for all claims

| Place of search | Date of completion of the search | Examiner |
|---|---|---|
| The Hague | 3 July 2025 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022513866 A

**Non-patent literature cited in the description**

- **ZI-YI DOU et al.** *Coarse-to-Fine Vision-Language Pre-training with Fusion in the Backbone*, https://arxiv.org/pdf/2206.07643.pdf
- **ALEC RADFORD et al.** *Learning Transferable Visual Models From Natural Language Supervision*, https://arxiv.org/pdf/2103.00020.pdf
- **ZHAO YANG et al.** *LAVT: Language-Aware Vision Transformer for Referring Image Segmentation*, https://arxiv.org/pdf/2112.02244.pdf